# FASCICULE DE BREVET EUROPEEN

(11) **EP 3 074 702 B1**
(45) Date de publication et mention de la délivrance du brevet: **16.08.2017**
(21) Numéro de dépôt: 14799504.7
(22) Date de dépôt: 30.09.2014
(51) Int. Cl.: F25D 19/00, F25D 21/00, F28F 9/02, F16L 59/12, F16L 9/19, F28F 13/00

(54) **ELÉMENT DE SUPPORT, CIRCUIT DE FLUIDE CRYOGÉNIQUE ET PROCÉDÉ CORRESPONDANTS**
TRÄGERELEMENT, ENTSPRECHENDE KRYOGENE FLÜSSIGKEITSSCHALTUNG UND ENTSPRECHENDES VERFAHREN
SUPPORT ELEMENT, CORRESPONDING CRYOGENIC FLUID CIRCUIT AND CORRESPONDING METHOD

(30) Priorité: 26.11.2013 FR 1361622
(43) Date de publication de la demande: 05.10.2016
(73) Titulaire: L'Air Liquide Société Anonyme pour l'Etude et l'Exploitation des Procédés Georges Claude, 75007 Paris (FR)
(72) Inventeur: FOURNEL, Jean-Luc, F-57530 Silly-sur-Nied (FR)
(74) Mandataire: De Cuenca, Emmanuel Jaime
(86) Numéro de dépôt international: PCT/FR2014/052464
(87) Numéro de publication internationale: WO 2015/079130

(56) Documents cités:
- EP-A2- 1 619 436
- US-A- 3 721 101
- US-A- 3 781 733
- US-A- 5 570 723

## Description

La présente invention concerne un élément de support pour circuit de fluide cryogénique ainsi qu'un circuit et un procédé comprenant un tel élément de support.

L'invention concerne plus particulièrement un élément de support pour circuit de fluide cryogénique comprenant une pluralité d'orifices prévus pour le passage respectivement de conduites de transfert de fluide cryogénique, ledit élément de support comprenant au moins un chemin thermique formé entre deux orifices adjacents, le chemin thermique comprenant une goulotte borgne ménagée entre les deux orifices adjacents, la goulotte étant délimitée par deux parois espacées, chaque paroi s'étendant entre deux extrémités selon une direction longitudinale perpendiculaire au plan des orifices, de première des extrémités des parois étant reliées respectivement aux deux orifices adjacents, les secondes extrémités des deux parois étant reliées entre-elles via un fond.

Pour faire sortir et entrer du gaz ou du liquide dans des circuits cryogéniques il est connu d'utiliser des chemins thermiques (appelés également « barrières thermiques »).

Ces dispositifs mécaniques allongent le chemin mécanique de conduction entre deux points reliés mécaniquement et qui sont à des températures différentes. Ces chemins thermiques utilisent des tubes soudés ménageant des espacements entre les deux points à relier mécaniquement.

Lorsque le circuit comprend plusieurs conduites à des températures différentes il ainsi nécessaire de prévoir autant de sorties individuelles et de chemins thermiques. Ceci nécessite de prévoir un grand nombre de perçages dans la cloison correspondante. La résistance mécanique de l'ensemble est altérée. En effet, la résistance au moment de flexion d'un ou des chemins thermique est relativement faible. Des éléments de supports tels que décrits sont connus des documents US 5570723, US 3781733 et EP 1619 436. Un but de la présente invention est de pallier tout ou partie des inconvénients de l'art antérieur relevés ci-dessus.

A cette fin, l'élément de support selon l'invention est défini par la revendication 1, dont le préambule correspond à l'état de l'art connu du document US 3721 101, figure 9. Cette architecture permet de regrouper les conduites (orifices correspondants) sur un même élément de support par groupes de températures proches tout en diminuant le nombre de chemins thermiques. Le dispositif permet également de diminuer le nombre de perçages comparativement à l'art antérieur et d'augmenter la résistance mécanique de l'ensemble.

La solution est également moins coûteuse à fabriquer, mois encombrante. La solution permet également de limiter les pertes thermiques par rapports aux solutions de l'art antérieur.

Par ailleurs, des modes de réalisation de l'invention peuvent comporter l'une ou plusieurs des caractéristiques suivantes :
- l'élément de support comprend un second chemin thermique, le second chemin thermique étant disposé entre le second ensemble d'orifices et une bordure périphérique de l'élément de support, le second chemin thermique étant en lien thermique et mécanique avec d'une part tous les orifices du second ensemble d'orifices et d'autre part, la bordure périphérique de l'élément de support,
- le second chemin thermique est l'unique chemin thermique situé entre le second ensemble d'orifices et la bordure périphérique de l'élément de support,
- le premier chemin thermique est l'unique chemin thermique situé entre le premier ensemble d'orifices et le second ensemble d'orifices,
- le premier ensemble d'orifices comprend un nombre d'orifices compris entre deux et dix, le second ensemble d'orifices comprenant un nombre d'orifices compris entre deux et dix,
- les deux parois espacées de chaque chemin thermique qui s'étendent selon une direction longitudinale sont cylindriques,
- l'élément de support comporte un trou prévu pour la communication des volumes situés de part et d'autre de l'élément de support,
- l'élément de support comprend ou est constitué de l'un au moins des matériaux parmi : de l'inox, un alliage métallique ou superalliage nickel-chrome, notamment un alliage commercialisé sous la marque inconel®,
- au moins une partie de la bordure périphérique de l'élément de support est solidaire d'un manchon ou d'une bague formant une interface de montage de l'élément de support sur un élément de structure, ledit élément de support étant logé au moins partiellement dans ladite bague,

L'invention concerne également un circuit de fluide cryogénique comprenant une pluralité de conduites de transfert de fluide(s) cryogénique(s) à des températures respectives déterminées, lesdites conduites s'étendant au travers respectivement des orifices d'un élément de support, l'élément de support étant conforme à l'une quelconque des caractéristiques ci-dessus ou ci-après.

Selon d'autres particularités possibles :
- les conduites s'étendant au travers des orifices du premier ensemble d'orifices sont destinées à transporter des fluides cryogéniques à des températures relativement inférieures aux températures des fluides cryogéniques destinés à être transportés par les conduites s'étendant au travers des orifices du second ensemble d'orifices,
- les conduites s'étendant au travers des orifices du premier ensemble d'orifices sont destinées à transporter des fluides cryogéniques à des températures proches c'est-à-dire présentant un différentiel de température compris entre zéro et 50 K et de préférence à des températures comprises entre 2 K et 10K,
- les conduites s'étendant au travers des orifices du second ensemble d'orifices sont destinées à transporter des fluides cryogéniques à des températures proches c'est-à-dire présentant un différentiel de température compris entre zéro et 200 K et de préférence à des températures comprises entre 80Ket110K,
- les conduites de transfert de fluides sont logées dans un volume sous vide délimité par une enveloppe extérieure et en ce que l'élément de support est disposé transversalement dans le volume sous vide, les conduites étant fixées audit élément de support,
- l'élément de support est solidaire d'une cloison séparant deux volumes maintenus à des pressions identiques ou distinctes, notamment d'une cloison d'une boîte de réfrigération ou une boîte de distribution de fluide cryogénique.

L'invention concerne également un procédé de maintien d'une pluralité de conduites cryogéniques traversant une cloison via un élément de support comprenant des orifices prévus respectivement pour le passage des conduites, le procédé comportant une étape de regroupement d'un premier ensemble de conduites véhiculant des fluides à de premières températures dans respectivement un premier ensemble d'orifices de l'élément de support et une étape de regroupement d'un second ensemble de conduites véhiculant des fluides à de secondes températures dans respectivement un second ensemble d'orifices de l'élément de support, dans lequel un premier chemin thermique est disposé entre les premier et second ensemble d'orifices de l'élément de support (1) et un second chemin thermique commun est disposé autour du second ensemble d'orifices (2) de l'élément de support et en ce que les premières températures sont inférieures aux secondes températures.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de dessus et en perspective d'un exemple de réalisation schématique et partielle d'un élément de support disposé dans une cloison d'un circuit de fluide cryogénique,
- la figure 2 représente une vue d'une section longitudinale selon la ligne AA de l'élément de support de la figure 1,
- la figure 3 représente une vue en perspective d'une coupe longitudinale selon la ligne AA de l'élément de support de la figure 1,
- la figure 4 représente une vue en perspective, schématique et partielle, d'un exemple d'utilisation d'un élément de support selon l'invention dans un circuit comprenant plusieurs conduites cryogéniques isolées sous vide.

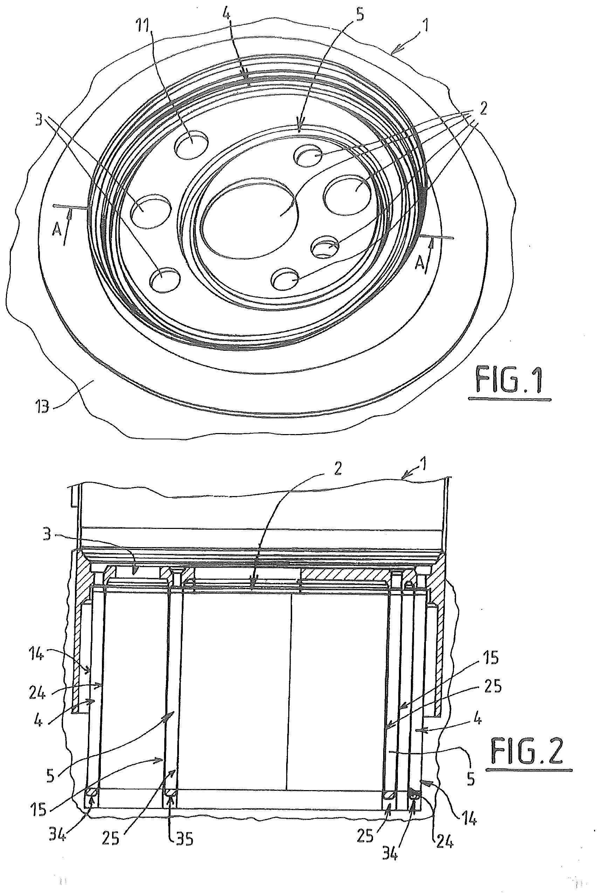

L'élément de support 1 de la figure 1 est implanté par exemple dans une cloison 13 séparant deux volumes distincts (à des températures et pressions pouvant être différentes ou égales).

La cloison 13 peut être par exemple une cloison d'une boîte de réfrigération ou une boîte de distribution de fluide cryogénique d'un réfrigérateur et/ou d'un liquéfacteur ou de tout autre appareil approprié.

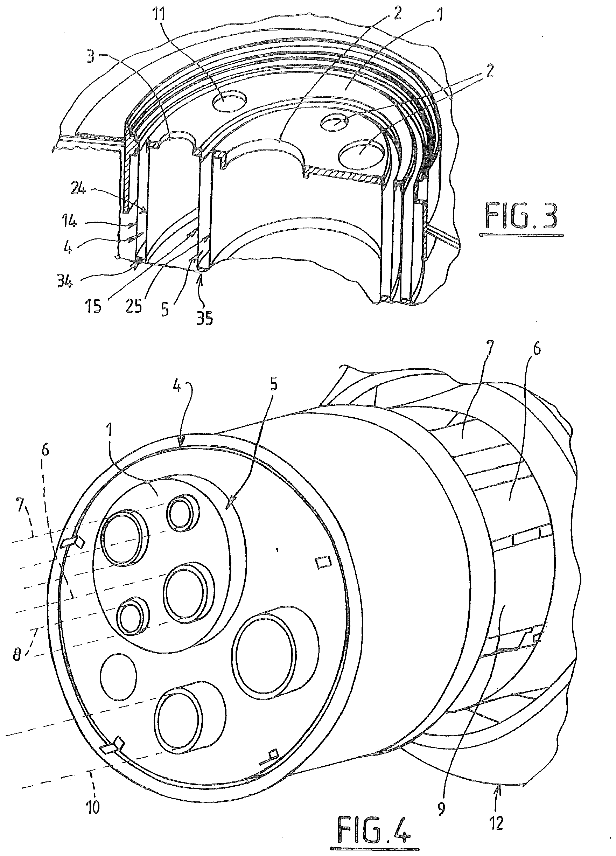

L'élément de support 1 pour circuit de fluide cryogénique représenté aux figures 1 à 3 comprend une pluralité d'orifices 2, 3 prévus le passage chacun d'une conduite de transfert de fluide cryogénique respective (cf. figure 4). Les orifices 2, 3 sont situés dans un même plan ou dans des plans parallèles.

Plus précisément, l'élément de support 1 comprend un premier ensemble d'orifices 2 centraux entouré d'un premier chemin thermique 5 et un second ensemble d'orifices 3 périphériques disposés entre le premier chemin thermique 5 et un second chemin thermique 4.

Le second chemin thermique 4 est disposé autour du second ensemble d'orifices 3, entre le second ensemble d'orifices 3 et une bordure périphérique (par exemple circulaire) de l'élément de support 1. Ces qualificatifs « premier » et « second » ne préjugent pas d'un ordre chronologique dans les transferts de calories ou de frigories. Les qualificatifs « premier » et « second » pour désigner les chemins thermiques 5 et 4 sont choisis arbitrairement selon leur ordre concentriquement (radialement du centre vers l'extérieur de l'élément de support 1 dans le plan des orifices 2, 3).

Le premier chemin thermique 5 est commun à tous les orifices 2 centraux du premier ensemble d'orifices 2 et à tous les orifices 3 du second ensemble d'orifices 3. C'est-à-dire que les deux extrémités du premier chemin thermique 5 sont reliées mécaniquement et thermiquement respectivement au premier ensemble d'orifices 2 et au second ensemble d'orifices 3. « Relié mécaniquement » signifie par exemple que le chemin thermique est relié mécaniquement (directement, par exemple par soudage) à la portion de tôle munie des orifices 2, 3 considérés. « Relié thermiquement » signifie par exemple qu'une conduction est possible directement entre le chemin thermique et la portion de matière munie des orifices 2, 3 considérés.

De même, le second chemin thermique 4 est commun à tous les orifices 3 du second ensemble d'orifices 3. C'est-à-dire que les deux extrémités du second chemin thermique 4 sont reliées mécaniquement et thermiquement respectivement au second ensemble d'orifices 3 et à la bordure périphérique de l'élément de support 1.

Cela signifie que les transferts thermique par conduction entre n'importe lequel des premiers orifices 2 centraux et n'importe lequel de seconds orifices 3 périphériques transite forcément et uniquement par le premier chemin thermique 5 (un seul chemin thermique entre ces deux ensembles). De même, les transferts thermiques par conduction entre n'importe lequel des seconds orifices 3 centraux et l'extérieur (la périphérie) de l'élément de support 1 transitent forcément et uniquement par le second chemin thermique 4 (un seul chemin thermique entre ces deux entités).

De plus, les transferts thermiques entre n'importe lequel des premiers orifices 2 et l'extérieur (la périphérie) de l'élément de support 1 transitent forcément par le premier 4 chemin thermique et le second 5 chemin thermique 4.

Comme visible aux figures 2 et 3, chaque chemin thermique 4, 5 formé entre deux entités comprend une goulotte borgne délimitée par deux parois 14, 24 ; 15, 25 parallèles espacées et un fond 34, 35.

Les deux parois espacées 14, 24 ; 15, 25 d'un même chemin thermique s'étendent entre deux extrémités longitudinales perpendiculairement au plan(s) des orifices 2, 3. Par exemple, pour le premier chemin thermique 5, les premières extrémités amont (vers le haut sur les figures 1 à 3) des deux parois 15, 25 espacées sont reliées respectivement aux deux ensembles d'orifices 2, 3 adjacents. Plus précisément, les premières extrémités amont des parois 15, 25 peuvent être reliées respectivement à deux plateaux de matière (tôle par exemple) qui comprennent respectivement le premier et le second ensemble d'orifices 2, 3.

Les secondes extrémités aval (vers le bas sur les figures 1 à 3) des deux parois 15, 25 sont reliées entre-elles via un fond transversal 35.

Pour le second chemin thermique 4, les premières extrémités amont (vers le haut sur les figures 1 à 3) des deux parois 14, 24 espacées sont reliées respectivement à la périphérie de l'élément de support et au second ensemble d'orifices 3 (par exemple via un plateau également).

Comme illustré dans l'exemple de figure 2, la première extrémité amont de la paroi 14 longitudinale située à périphérie peut être reliée (par exemple par soudage) à un manchon ou une bague 16 extérieure entourant l'élément de support. Cette bague 16 (de préférence en matériau du même type que l'élément de support) peut permettre de rigidifier l'élément de support et peut notamment servir d'interface de montage sur une structure d'un circuit.

Les secondes extrémités aval (vers le bas sur les figures 1 à 3) des deux parois 14, 24 sont reliées entre-elles via un fond transversal 34.

Les paires de parois 14, 24 ; 15, 25 espacées sont de préférence cylindriques et concentriques. L'espacement transversal entre les deux parois est par exemple compris entre 7 et 50 mm.

L'élément support 1 et ses différents plateaux et chemins thermiques 4, 5 peuvent être constitués d'inox soudé ou de tout autre matériau métallique ou autre compatible avec les températures cryogéniques.

De façon préférée et avantageuse, le premier ensemble d'orifices 2 est prévu pour le passage des conduites transportant du ou des fluides relativement plus froids et à des températures voisines. Par exemple, le différentiel de température entre les fluides passant par les différents premiers orifices 2 est compris entre zéro et 50K. Par exemple les premiers orifices 2 reçoivent des conduites de fluides à des températures comprises entre 3K et 10K.

Le second ensemble d'orifices 3 peut être prévu quant à lui pour le passage des conduites transportant du fluide relativement plus chaud (par rapport aux premiers orifices 2). Par exemple, le différentiel de température entre les fluides passant par les différents seconds orifices 3 est compris entre zéro et 200K. Par exemple les seconds orifices 3 reçoivent des conduites de fluides à des températures comprises entre 80K et 100K.

Selon la solution proposée, les conduites les plus froides peuvent être regroupées au centre de l'élément de support 1 (premiers orifices 2) tandis que les conduites relativement plus chaudes sont disposées autour de ce centre (seconds orifices).

Ainsi, une sortie commune est prévue dans l'élément de support 1 pour tous les fluides avec un regroupement des températures proches. Chaque tube ou conduite périphérique (second ensemble d'orifices 3) est isolée par un chemin thermique 4 (long chemin pour égaliser les températures) qui peut être soudé sur un plateau support regroupant les tubes de températures proches. Ce plateau intermédiaire périphérique est lui-même monté sur un chemin thermique 5 le reliant à un plateau voisin central supportant des tubes de températures différentes (premier ensemble d'orifices 2).

Le premier ensemble d'orifices 2 peut comprendre un nombre d'orifices 2 compris entre deux et dix (par exemple cinq dans l'exemple de la figure 1). De même, le second ensemble d'orifices 3 comprend un nombre d'orifices 3 compris entre deux et six (par exemple deux dans l'exemple de la figure 1).

Comme illustré à la figure 1, un trou 11 peut être prévu dans le plateau qui rassemble le second ensemble d'orifices 3. Ce trou 11 n'est pas destiné à accueillir une conduite de fluide mais peut être prévu pour permettre une communication entre les volumes situés de part et d'autre d'élément de support.

Comme illustré à la figure 4, l'élément de support 1 peut être utilisé dans un circuit cryogénique d'une ou plusieurs conduites isolées sous vide.

L'élément de support 1 est par exemple logé dans un volume sous vide délimité par une enveloppe 12 extérieure. La pluralité de conduites 6, 7, 8, 9, 10 de transfert de fluides sont logées dans un volume sous vide et reliée (de préférence rigidement) à l'élément de support 1. L'élément de support 1 est disposé transversalement dans le volume sous vide et forme un point fixe pour les conduites 6, 7, 8, 9, 10.

Tout en étant de structure simple et peu coûteuse, l'élément de support 1 selon l'invention permet d'allonger efficacement le chemin thermique entre les parties de circuit qui ont des températures différentes pour moins contrarier les températures des fluides transportés. De plus, l'agencement des conduites selon leur température permet de disposer des conduites froides (températures entre 300K et 80K) entre d'une part la périphérie chaude (par exemple 300K) de l'élément support et les conduites plus froides des premiers orifices 2 (températures comprises entre 80K et 3K par exemple).

Les conduites circulant dans les second 3 orifices 3 peuvent notamment être utilisées pour « thermaliser », c'est-à-dire céder des frigories au système entre la partie périphérique chaude et la partie centrale plus froide. Ceci permet de mieux garantir la température des conduites plus froides passant par les permiers orifices 2.

Les structures décrites ci-dessus permettent notamment de diminuer les pertes thermiques par rapport à l'art antérieur.

L'architecture permet de créer une cartographie des températures avec les conduits les plus froids au centre et les conduits les plus chaudes vers l'extérieure de la jonction. Ceci permet de créer un gradient de températures qui minimise les effets négatifs pour les différents circuits.

De plus, le dispositif possède ainsi une plus grande résistance mécanique notamment une plus grande résistance aux efforts axiaux et au moment de flexion. Ceci est dû notamment à l'augmentation de l'inertie des viroles (tubes) des chemins thermiques 4, 5. Cet agencement nécessite moins de perçages dans l'enveloppe ou cloison extérieure. La structure revendiquée permet également de diminuer le coût de fabrication du dispositif.

Bien entendu l'invention n'est pas limitée à l'exemple décrit ci-dessus. Par exemple il peut être possible de prévoir trois ou plus de trois ensembles d'orifices et dont deux ensembles adjacents sont séparés par un unique ou plusieurs chemins thermiques communs.

De même, la répartition concentriques des diverses conduites dans les orifices peut être modifiée selon les besoins par groupes de températures proches.

## Revendications

1. Elément de support pour circuit de fluide cryogénique comprenant une pluralité d'orifices (2, 3) prévus pour le passage respectivement de conduites de transfert de fluide cryogénique, ledit élément de support (1) comprenant au moins un premiers chemin thermique (5) formé entre deux orifices (2, 3) adjacents, le premier chemin thermique (5) comprenant une goulotte borgne ménagée entre les deux orifices (2, 3) adjacents, la goulotte (5) étant délimitée par deux parois (14, 24, 15, 25) espacées, chaque paroi s'étendant entre deux extrémités selon une direction longitudinale perpendiculaire au plan des orifices (2, 3), de premières extrémités des parois (14, 24, 15, 25) étant reliées respectivement aux deux orifices (2, 3) adjacents, les secondes extrémités des deux parois (14, 24 ; 15, 25) étant reliées entre-elles via un fond (34,35), l'élément de support (1) étant **caractérisé en ce qu'**il comprend un premier ensemble d'orifices (2) entouré du premier chemin thermique (5) et un second ensemble d'orifices (3), les orifices (2, 3) des premiers et second ensembles d'orifices étant situés dans un même plan ou dans des plans parallèles, les orifices des premier et second ensembles d'orifices étant formés respectivement dans deux plateaux de matière, tels que des tôles, les deux plateaux de matière comprenant respectivement le premier et le second ensemble d'orifices étant parallèles et situés dans un même plan ou des plans distincts parallèles, le premier chemin thermique (5) étant situé entre le premier ensemble d'orifices (2) et le second ensemble d'orifices (3), c'est-à-dire que le premier chemin thermique (5) est en lien thermique et mécanique avec d'une part tous les orifices (2) du premier ensemble d'orifices et, d'autre part, tous les orifices (3) du second ensemble d'orifices.

2. Elément de support selon la revendication 1, **caractérisé en ce qu'**il comprend un second chemin thermique (4), le second chemin thermique (4) étant disposé entre le second ensemble d'orifices (3) et une bordure périphérique de l'élément de support (1), le second chemin thermique (4) étant en lien thermique et mécanique avec d'une part tous les orifices (3) du second ensemble d'orifices (3) et d'autre part, la bordure périphérique de l'élément de support (1).

3. Elément de support selon la revendication 2 **caractérisé en ce que** le second chemin thermique comprend une goulotte borgne ménagée entre le second ensemble d'orifices (3) et la bordure périphérique, ladite goulotte étant délimitée par deux parois (14, 24) espacées, chaque paroi s'étendant entre deux extrémités selon une direction longitudinale perpendiculaire au plan des orifices (3), de premières extrémités des parois (14,24) étant reliées respectivement à la bordure périphérique et au second ensemble d'orifices (3), les secondes extrémités des deux parois (14, 24) étant reliées entre elles via un fond (34).

4. Elément de support selon la revendication 2 ou 3, **caractérisé en ce que** le second chemin thermique (4) est l'unique chemin thermique situé entre le second ensemble d'orifices (3) et la bordure périphérique de l'élément de support (1).

5. Elément de support selon l'une quelconque des revendications 1 à 4, **caractérisé en ce que** le premier chemin thermique (5) est l'unique chemin thermique situé entre le premier ensemble d'orifices (2) et le second ensemble d'orifices (3).

6. Elément de support selon l'une quelconque des revendications 1 à 5, **caractérisé en ce que** le premier ensemble d'orifices (2) comprend un nombre d'orifices (2) compris entre deux et dix et **en ce que** le second ensemble d'orifices (3) comprend un nombre d'orifices (2) compris entre deux et dix.

7. Elément de support selon l'une quelconque des revendications 1 à 6, **caractérisé en ce que** les deux parois (14, 24, 15, 25) espacées de chaque chemin thermique (4, 5) qui s'étendent selon une direction longitudinale sont cylindriques.

8. Elément de support selon l'une quelconque des revendications 1 à 7, **caractérisé en ce qu'**il comporte un trou (11) prévu pour la communication des volumes situés de part et d'autre de l'élément de support.

9. Circuit de fluide cryogénique comprenant une pluralité de conduites (6, 7, 8, 9, 10) de transfert de fluide(s) cryogénique(s) à des températures respectives déterminées, lesdites conduites (6, 7, 8, 9, 10) s'étendant au travers respectivement des orifices (2, 3) d'un élément de support (1), **caractérisé en ce que** l'élément de support (1) est conforme à l'une quelconque des revendications 1 à 8.

10. Circuit selon la revendication 9, **caractérisé en ce que** les conduites (6, 7, 8) s'étendant au travers des orifices (2) du premier ensemble d'orifices (2) sont destinées à transporter des fluides cryogéniques à des températures relativement inférieures aux températures des fluides cryogéniques destinés à être transportés par les conduites (9, 10) s'étendant au travers des orifices (3) du second ensemble d'orifices (3).

11. Circuit selon la revendication 10, **caractérisé en ce que** les conduites (6, 7, 8) s'étendant au travers des orifices (2) du premier ensemble d'orifices (2) sont destinées à transporter des fluides cryogéniques à des températures proches c'est-à-dire présentant un différentiel de température compris entre zéro et 50 K et de préférence à des températures comprises entre 2 K et 10K.

12. Circuit selon l'une quelconque des revendications 9 à 11, **caractérisé en ce que** les conduites (6, 7, 8, 9, 10) de transfert de fluides sont logées dans un volume sous vide délimité par une enveloppe (12) extérieure et **en ce que** l'élément de support (1) est disposé transversalement dans le volume sous vide et **en ce que** les conduites (6, 7, 8, 9, 10) sont fixées audit élément de support (1).

13. Circuit selon l'une quelconque des revendications 9 à 12, **caractérisé en ce que** l'élément de support (1) est solidaire d'une cloison (13) séparant deux volumes maintenus à des pressions identiques ou distinctes, notamment d'une cloison (13) d'une boîte de réfrigération ou une boîte de distribution de fluide cryogénique.

14. Procédé de maintien d'une pluralité de conduites (6, 7, 8, 9, 10) cryogéniques traversant une cloison via un élément de support (1) conforme à l'une quelconque des revendications 2 ou 3 à 8 dépendantes de la revendication 2 comprenant des orifices prévus respectivement pour le passage des conduites, **caractérisé en ce qu'**il comporte une étape de regroupement d'un premier ensemble de conduites (6, 7, 8) véhiculant des fluides à de premières températures dans respectivement un premier ensemble d'orifices (2) de l'élément de support et une étape de regroupement d'un second ensemble de conduites véhiculant des fluides à de secondes températures dans respectivement un second ensemble d'orifices (3) de l'élément de support, dans lequel le premier chemin thermique (5) est disposé entre les premier et second ensembles d'orifices (2, 3) de l'élément de support (1) et **en ce que** second chemin thermique (4) commun est disposé autour du second ensemble d'orifices (3) et **en ce que** les premières températures sont inférieures aux secondes températures.

## Patentansprüche

1. Trägerelement für kryogenen Flüssigkeitskreislauf, das eine Vielzahl von Öffnungen (2, 3) umfasst, die jeweils für die Durchführung von Transferleitungen von kryogener Flüssigkeit vorgesehen sind, wobei das Trägerelement (1) mindestens einen ersten thermischen Pfad (5) umfasst, der zwischen zwei benachbarten Öffnungen (2, 3) gebildet ist, wobei der erste thermische Pfad (5) einen Blindkanal umfasst, der zwischen den zwei benachbarten Öffnungen (2, 3) ausgeführt ist, wobei der Kanal (5) durch zwei beabstandete Wände (14, 24, 15, 25) begrenzt ist, wobei sich jede Wand zwischen zwei Enden in eine Längsrichtung senkrecht zur Ebene der Öffnungen (2, 3) erstreckt, wobei erste Enden der Wände (14, 24, 15, 25) jeweils mit den zwei benachbarten Öffnungen (2, 3) verbunden sind, wobei die zweiten Enden der zwei Wände (14, 24; 15, 25) über einen Boden (34, 35) miteinander verbunden sind, wobei das Trägerelement (1) **dadurch gekennzeichnet ist, dass** es einen ersten Satz von Öffnungen (2) umfasst, der von dem ersten thermischen Pfad (5) umgeben ist, und einen zweiten Satz von Öffnungen (3), wobei die Öffnungen (2, 3) des ersten und zweiten Satzes von Öffnungen in einer gleichen Ebene oder in parallelen Ebenen liegen, wobei die Öffnungen des ersten und zweiten Satzes von Öffnungen jeweils in zwei Platten aus Material, wie beispielsweise Blechen, gebildet sind, wobei die zwei Materialplatten jeweils den ersten und den zweiten Satz von Öffnungen umfassen, die parallel sind und in einer gleichen Ebene oder unterschiedlichen parallelen Ebenen liegen, wobei der erste thermische Pfad (5) zwischen dem ersten Satz von Öffnungen (2) und dem zweiten Satz von Öffnungen (3) liegt, das heißt dass der erste thermische Pfad (5) in thermischer und mechanischer Verbindung mit einerseits allen den Öffnungen (2) des ersten Satzes von Öffnungen und andererseits allen den Öffnungen (3) des zweiten Satzes von Öffnungen steht.

2. Trägerelement nach Anspruch 1, **dadurch gekennzeichnet, dass** es einen zweiten thermischen Pfad (4) umfasst, wobei der zweite thermische Pfad (4) zwischen dem zweiten Satz von Öffnungen (3) und einem umlaufenden Rand des Trägerelements (1) angeordnet ist, wobei der zweite thermische Pfad (4) in thermischer und mechanischer Verbindung mit einerseits allen den Öffnungen (3) des zweiten Satzes von Öffnungen (3) und andererseits dem umlaufenden Rand des Trägerelements (1) steht.

3. Trägerelement nach Anspruch 2, **dadurch gekennzeichnet, dass** der zweite thermische Pfad einen Blindkanal umfasst, der zwischen dem zweiten Satz von Öffnungen (3) und dem umlaufenden Rand ausgeführt ist, wobei der Kanal durch zwei beabstandete Wände (14, 24) begrenzt ist, wobei sich jede Wand zwischen zwei Enden in eine Längsrichtung senkrecht zur Ebene der Öffnungen (3) erstreckt, wobei erste Enden der Wände (14, 24) jeweils mit dem umlaufenden Rand und mit dem zweiten Satz von Öffnungen (3) verbunden sind, wobei die zweiten Enden der zwei Wände (14, 24) über einen Boden (34) miteinander verbunden sind.

4. Trägerelement nach Anspruch 2 oder 3, **dadurch gekennzeichnet, dass** der zweite thermische Pfad (4) der einzige thermische Pfad ist, der zwischen dem zweiten Satz von Öffnungen (3) und dem umlaufenden Rand des Trägerelements (1) liegt.

5. Trägerelement nach einem der Ansprüche 1 bis 4, **dadurch gekennzeichnet, dass** der erste thermische Pfad (5) der einzige thermische Pfad ist, der zwischen dem ersten Satz von Öffnungen (2) und dem zweiten Satz von Öffnungen (3) liegt.

6. Trägerelement nach einem der Ansprüche 1 bis 5, **dadurch gekennzeichnet, dass** der erste Satz von Öffnungen (2) eine Anzahl von Öffnungen (2) im Bereich zwischen zwei und zehn umfasst, und dadurch, dass der zweite Satz von Öffnungen (3) eine Anzahl von Öffnungen (2) im Bereich zwischen zwei und zehn umfasst.

7. Trägerelement nach einem der Ansprüche 1 bis 6, **dadurch gekennzeichnet, dass** die zwei beabstandeten Wände (14, 24, 15, 25) jedes thermischen Pfades (4, 5), die sich in eine Längsrichtung erstrecken, zylindrisch sind.

8. Trägerelement nach einem der Ansprüche 1 bis 7, **dadurch gekennzeichnet, dass** es ein Loch (11) umfasst, das für die Kommunikation der Volumen vorgesehen ist, die auf beiden Seiten des Trägerelements liegen.

9. Kryogener Flüssigkeitskreislauf, der eine Vielzahl von Transferleitungen (6, 7, 8, 9, 10) von kryogener/n Flüssigkeit(en) bei jeweiligen bestimmten Temperaturen umfasst, wobei sich die Leitungen (6, 7, 8, 9, 10) jeweils durch die Öffnungen (2, 3) eines Trägerelements (1) hindurch erstrecken, **dadurch gekennzeichnet, dass** das Trägerelement (1) gemäß einem der Ansprüche 1 bis 8 ist.

10. Kreislauf nach Anspruch 9, **dadurch gekennzeichnet, dass** die Leitungen (6, 7, 8), die sich durch die Öffnungen (2) des ersten Satzes von Öffnungen (2) hindurch erstrecken, dazu bestimmt sind, kryogene Flüssigkeiten bei Temperaturen relativ unter den Temperaturen der kryogenen Flüssigkeiten zu transportieren, die dazu bestimmt sind, durch die Leitungen (9, 10) transportiert zu werden, die sich durch die Öffnungen (3) des zweiten Satzes von Öffnungen (3) hindurch erstrecken.

11. Kreislauf nach Anspruch 10, **dadurch gekennzeichnet, dass** die Leitungen (6, 7, 8), die sich durch die Öffnungen (2) des ersten Satzes von Öffnungen (2) hindurch erstrecken, dazu bestimmt sind, kryogene Flüssigkeiten bei nahen Temperaturen, das heißt die eine Temperaturdifferenz im Bereich zwischen Null und 50 K aufweisen, und bevorzugt bei Temperaturen im Bereich zwischen 2 K und 10 K zu transportieren.

12. Kreislauf nach einem der Ansprüche 9 bis 11, **dadurch gekennzeichnet, dass** die Flüssigkeitstransferleitungen (6, 7, 8, 9, 10) in einem Volumen unter Vakuum untergebracht sind, das durch eine Außenhülle (12) begrenzt ist, und dadurch, dass das Trägerelement (1) quer in dem Volumen unter Vakuum angeordnet ist, und dadurch, dass die Leitungen (6, 7, 8, 9, 10) an dem Trägerelement (1) befestigt sind.

13. Kreislauf nach einem der Ansprüche 9 bis 12, **dadurch gekennzeichnet, dass** das Trägerelement (1) fest mit einer Trennwand (13) verbunden ist, die zwei bei identischen oder unterschiedlichen Drücken gehaltene Volumen trennt, insbesondere mit einer Trennwand (13) einer Kühlbox oder einer Verteilerbox von kryogener Flüssigkeit.

14. Verfahren zum Halten einer Vielzahl von durch eine Trennwand hindurchgehenden kryogenen Leitungen (6, 7, 8, 9, 10) über ein Trägerelement (1) gemäß einem der Ansprüche 2 oder 3 bis 8, die von Anspruch 2 abhängig sind, umfassend Öffnungen, die jeweils für die Durchführung der Leitungen vorgesehen sind, **dadurch gekennzeichnet, dass** es einen Schritt des Gruppierens eines ersten Satzes von Leitungen (6, 7, 8), die Flüssigkeiten bei ersten Temperaturen in jeweils einem ersten Satz von Öffnungen (2) des Trägerelements befördern, enthält, und einen Schritt des Gruppierens eines zweiten Satzes von Leitungen, die Flüssigkeiten bei zweiten Temperaturen in jeweils einem zweiten Satz von Öffnungen (3) des Trägerelements befördern, bei dem der erste thermische Pfad (5) zwischen dem ersten und zweiten Satz von Öffnungen (2, 3) des Trägerelements (1) angeordnet ist, und dadurch, dass der gemeinsame zweite thermische Pfad (4) um den zweiten Satz von Öffnungen (3) herum angeordnet ist und dadurch, dass die ersten Temperaturen unter den zweiten Temperaturen sind.

## Claims

1. Cryogenic fluid circuit supporting element comprising a plurality of orifices (2, 3) provided for the passage respectively of cryogenic fluid transfer ducts, said supporting element (1) comprising at least a first heat path (5) formed between two adjacent orifices (2, 3), the first heat path (5) comprising a blind opening arranged between the two adjacent orifices (2, 3), the opening (5) being defined by two spaced-apart walls (14, 24, 15, 25), each wall extending between two ends along a longitudinal direction perpendicular to the plane of the orifices (2, 3), first ends of the walls (14, 24, 15, 25) being connected respectively to the two adjacent orifices (2, 3), the second ends of the two walls (14, 24; 15, 25) being interconnected via a bottom (34, 35), the supporting element (1) being **characterised in that** it comprises a first set of orifices (2) surrounded by the first heat path (5) and a second set of orifices (3), the orifices (2, 3) of the first and second sets of orifices being situated in the same plane or in parallel planes, the orifices of the first and second sets of orifices being formed respectively in two material plates, such as sheets, the two material plates respectively comprising the first and the second set of orifices being parallel and situated in the same plane or in separate parallel planes, the first heat path (5) being situated between the first set of orifices (2) and the second set of orifices (3), i.e. the first heat path (5) is thermally and mechanically linked with, on one hand, all the orifices (2) of the first set of orifices and, on the other, all the orifices (3) of the second set of orifices.

2. Supporting element according to claim 1, **characterised in that** it comprises a second heat path (4), the second heat path (4) being arranged between the second set of orifices (3) and a peripheral edge of the supporting element (1), the second heat path (4) being thermally and mechanically linked with, on one hand, all the orifices (3) of the second set of orifices (3) and, on the other, the peripheral edge of the supporting element (1).

3. Supporting element according to claim 2 **characterised in that** the second heat path comprises a blind opening arranged between the second set of orifices (3) and the peripheral edge, said opening being defined by two spaced-apart walls (14, 24), each wall extending between two ends along a longitudinal direction perpendicular to the plane of the orifices (3), first ends of the walls (14, 24) being connected respectively to the peripheral edge and to the second set of orifices (3), the second ends of the two walls (14, 24) being interconnected via a bottom (34).

4. Supporting element according to claim 2 or 3, **characterised in that** the second heat path (4) is the only heat path situated between the second set of orifices (3) and the peripheral edge of the supporting element (1).

5. Supporting element according to any one of claims 1 to 4, **characterised in that** the first heat path (5) is the only heat path situated between the first set of orifices (2) and the second set of orifices (3).

6. Supporting element according to any one of claims 1 to 5, **characterised in that** the first set of orifices (2) comprises a number of orifices (2) between two and ten and **in that** the second set of orifices (3) comprises a number of orifices (2) between two and ten.

7. Supporting element according to any one of claims 1 to 6, **characterised in that** the two spaced-apart walls (14, 24, 15, 25) of each heat path (4, 5) extending along a longitudinal direction are cylindrical.

8. Supporting element according to any one of claims 1 to 7, **characterised in that** it includes a hole (11) provided for the communication of the volumes situated on either side of the supporting element.

9. Cryogenic fluid circuit comprising a plurality of ducts (6, 7, 8, 9, 10) for transferring cryogenic fluid(s) at respective defined temperatures, said ducts (6, 7, 8, 9, 10) extending via respectively the orifices (2, 3) of a supporting element (1), **characterised in that** the supporting element (1) is according to any one of claims 1 to 8.

10. Circuit according to claim 9, **characterised in that** the ducts (6, 7, 8) extending via the orifices (2) of the first set of orifices (2) are intended to convey cryogenic fluids at temperatures relatively lower than the temperatures of the cryogenic fluids intended to be conveyed by the ducts (9, 10) extending via the orifices (3) of the second set of orifices (3).

11. Circuit according to claim 10, **characterised in that** the ducts (6, 7, 8) extending via the orifices (2) of the first set of orifices (2) are intended to convey cryogenic fluids at similar temperatures i.e. having a temperature differential between zero and 50 K and preferably at temperatures between 2 K and 10 K.

12. Circuit according to any one of claims 9 to 11, **characterised in that** the ducts (6, 7, 8, 9, 10) for transferring fluids are housed in a volume in a vacuum defined by an outer jacket (12) and **in that** the supporting element (1) is arranged transversally in the volume in a vacuum and **in that** the ducts (6, 7, 8, 9, 10) are attached to said supporting element (1).

13. Circuit according to any one of claims 9 to 12, **characterised in that** the supporting element (1) is rigidly connected to a partition (13) separating two volumes maintained at identical or separate pressure, particularly with a partition (13) of a refrigeration box or a cryogenic fluid distribution box.

14. Method for supporting a plurality of cryogenic ducts (6, 7, 8, 9, 10) passing through a partition via a supporting element (1) according to any one of claims 2 or 3 to 8 dependent on claim 2 comprising orifices provided respectively for the passage of the ducts, **characterised in that** it includes a step for grouping together a first set of ducts (6, 7, 8) conveying fluids at first temperatures in respectively a first set of orifices (2) of the supporting element and a step for grouping together a second set of ducts conveying fluids at second temperatures in respectively a second set of orifices (3) of the supporting element, wherein the first heat path (5) is arranged between the first and second sets of orifices (2, 3) of the supporting element (1) and **in that** the second common heat path (4) is arranged about the second set of orifices (3) and **in that** the first temperature are lower than the second temperatures.
